# EUROPEAN PATENT SPECIFICATION

(11) **EP 3 205 483 B1**
(45) Date of publication and mention of the grant of the patent: **26.12.2018**
(21) Application number: 17151008.4
(22) Date of filing: 11.01.2017
(51) Int. Cl.: B29C 67/00, B33Y 40/00, B33Y 50/02

(54) **ADDITIVE MANUFACTURING QUALITY CONTROL SYSTEMS**
SYSTEME ZUR KONTROLLE DER QUALITÄT VON GENERATIVER FERTIGUNG
SYSTÈMES DE CONTRÔLE DE LA QUALITÉ D'IMPRESSION 3D

(30) Priority: 12.01.2016 US 201614993546
(43) Date of publication of application: 16.08.2017
(73) Proprietor: Hamilton Sundstrand Corporation, Charlotte, NC 28217 (US)
(72) Inventor: VERSLUYS, Kiley J., Hartford, CT Connecticut 06103 (US); GIULIETTI, Diana, Tariffville, CT Connecticut 06081 (US)
(74) Representative: Dehns

(56) References cited:
- WO-A1-2015/103476
- US-A1- 2004 170 765
- US-A1- 2006 208 396
- US-A1- 2015 115 490
- US-A1- 2015 273 583

## Description

### BACKGROUND

### 1. Field

The present disclosure relates to additive manufacturing, more specifically to quality control for additive manufacturing devices and processes.

### 2. Description of Related Art

Part swell puts a recoater at risk for crashing into the part, thus damaging the part or the recoater itself. There is no automatic system for detecting defects before they are irrecoverable. Also, sometimes a powder bed fusion machine experiences incomplete recoats or short feeds. There is currently no system in place to monitor recoat quality or incomplete coverage.

US 2015/115490 discloses a beam melting installation and method for additive manufacturing.

Such conventional methods and systems have generally been considered satisfactory for their intended purpose. However, there is still a need in the art for improved additive manufacturing systems. The present disclosure provides a solution for this need.

### SUMMARY

According to a first aspect, there is provided a method according to claim 1.

Determining the quality can include comparing the torque data with reference data to determine whether the torque data is within a predetermined range of the reference data. Determining the quality can include determining if a powder recoat on the build area is incomplete.

The method can include one or more of alerting a user and/or prompting the user to recoat the build area. In certain embodiments, the method can include causing the powder recoater to recoat the build area.

Determining the quality can include determining if an additively manufactured product in the build area has part swell if a predetermined swell torque is received. Determining if an additively manufactured product in the build area has part swell can include determining if the part swell is recoverable part swell or irrecoverable part swell based on received torque data.

In certain embodiments, determining the quality can include correlating the torque data with recoater location data and/or reference build location data for the additively manufactured product, such that the location of one or more specific additively manufactured products can be determined if the one or more of the additively manufactured products has part swell.

If the part swell is determined to be recoverable, the method can include lowering a laser power on and/or at a region of the one or more of the additively manufactured products that have recoverable part swell. If the part swell is determined to be irrecoverable, the method can include alerting a user and/or shutting off a laser power to the additively manufactured products that have irrecoverable part swell.

According to a second aspect, there is provided a non-transitory computer readable medium according to claim 8.

A recoater blade assembly can include a shaft, a plurality of collars rotatably disposed around the shaft, each collar including a blade segment rigidly connected to the collar, and a plurality of load cells that are configured to sense force between the shaft and the collars. Each load cell can be disposed between a collar flange and a shaft flange.

These and other features of the systems and methods of the subject disclosure will become more readily apparent to those skilled in the art from the following detailed description taken in conjunction with the drawings.

### BRIEF DESCRIPTION OF THE DRAWINGS

So that those skilled in the art to which the subject disclosure appertains will readily understand how to make and use the devices and methods of the subject disclosure without undue experimentation, embodiments thereof will be described in detail herein below with reference to certain figures, wherein:
Fig. 1 is a flow chart of an embodiment of a method in accordance with this disclosure;
Fig. 2 is a perspective view of an embodiment of a system in accordance with this disclosure;
Fig. 3 is a plan view of an embodiment of a build area in accordance with this disclosure, showing an incomplete recoat such that portions of additively manufactured products are exposed;
Fig. 4 is a plan view of an embodiment of a build area in accordance with this disclosure, showing part swell such that an additively manufactured product are exposed above the recoated powder layer;
Fig. 5A is a perspective view of an embodiment of a recoater blade assembly in accordance with this disclosure, shown having segments;
Fig. 5B is a cross-sectional elevation view of the recoater blade assembly of Fig. 5A; and
Fig. 6 is a perspective schematic view of an embodiment of an additively manufacturing system in accordance with this disclosure.

### DETAILED DESCRIPTION

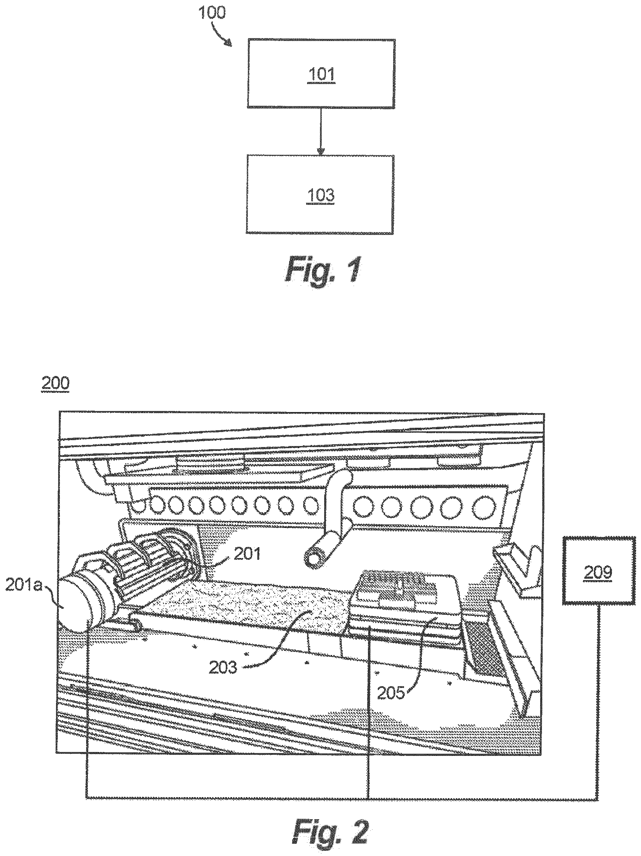

Reference will now be made to the drawings wherein like reference numerals identify similar structural features or aspects of the subject disclosure. For purposes of explanation and illustration, and not limitation, an illustrative view of an embodiment of a method in accordance with the disclosure is shown in Fig. 1 and is designated generally by reference character 100. Other embodiments and/or aspects of this disclosure are shown in Figs. 2-6. The systems and methods described herein can be used to monitor a quality in real time or after the fact of an additive manufacturing process and/or product thereof.

Referring to Figs. 1 and 2, a method 100 includes receiving torque data 101 of a powder recoater 201 operatively connected to an additive manufacturing system 200. The powder recoater 201 includes a roller 201a for leveling/compacting powder which rotates relative to the powder bed 203. As is appreciated by those having ordinary skill in the art, the recoater 201 is configured to sweep powder (e.g., by translating from left to right in the embodiment shown in Fig. 2) from the powder bed 203, push it onto a build area 205 (shown in a fully lifted position), and roll over the deposited powder with the roller 201 to coat the build area 205 with a layer of powder of a predetermined thickness. A controller 209 can receive the torque data and control the recoater 201 and/or any other suitable component of system 200.

The torque data can be obtained via any suitable source (e.g., a torque sensor placed on the roller of the recoater 201) and/or can be calculated from motor speed and/or input power. The torque data includes torque data of the recoater 201 when the recoater 201 traverses the build area 205.

The method also includes determining a quality 103 of one or more of an additive manufacturing process and/or product based on the torque data. Determining the quality 103 can include comparing the torque data with reference data to determine whether the torque data is within a predetermined range of the reference data. For example, known thresholds for normal operations (e.g., proper coating, no part swell) can be set or determined.

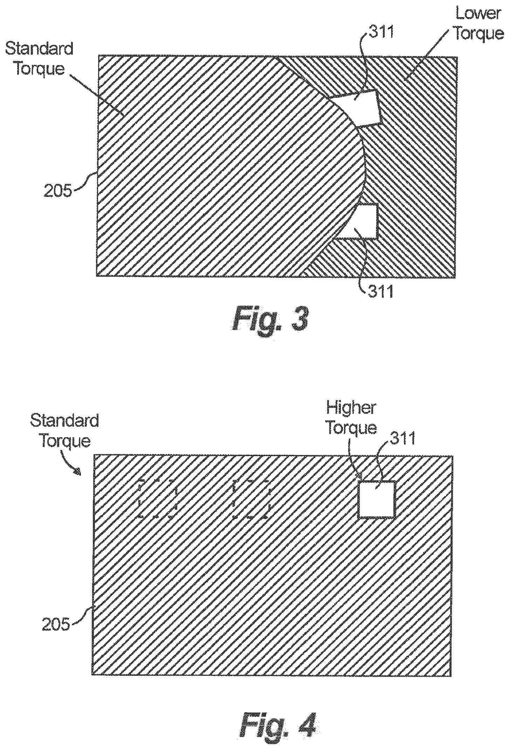

Referring to Fig. 3, determining the quality 103 can include determining if a powder recoat on the build area 205 is incomplete. Torque values under a minimum threshold can indicate incomplete coating (e.g., short feed such that a product 311 is exposed, insufficient layer thickness), for example. In such a case, the method 100 can include one or more of alerting a user and/or prompting the user to recoat the build area and/or that there is insufficient powder, for example. In certain embodiments, the method 100 can include causing the powder recoater 201 to recoat the build area 205 (e.g., via controller 209).

Referring to Fig. 4, determining the quality 103 can include determining if an additively manufactured product 311 in the build area 205 has part swell if a predetermined swell torque is received. Torque values above a maximum threshold can indicate part swell (e.g., because the recoater pushes against the swollen part that protrudes from the powder as shown in Fig. 4). In certain embodiments, determining the quality 103 can include correlating the torque data with recoater location data and/or reference build location data for the additively manufactured product 311, such that the location of one or more specific additively manufactured products 311 can be determined if the one or more of the additively manufactured products 311 has part swell.

Determining if an additively manufactured product 311 in the build area 205 has part swell can include determining if the part swell is recoverable part swell or irrecoverable part swell based on received torque data. If the part swell is determined to be recoverable, the method 100 can include lowering a laser power on and/or at a region of the one or more of the additively manufactured products 311 that have recoverable part swell. If the part swell is determined to be irrecoverable, the method 100 can include alerting a user and/or shutting off a laser power to the additively manufactured products 311 that have irrecoverable part swell.

A non-transitory computer readable medium includes computer readable instructions for a controller 209 that is configured to control an additive manufacturing process. The computer readable instructions include a method 100 or any suitable portion thereof as described above.

As described above, sensing torque on the roller of recoater 201 allows for detection of abnormalities in-process which can help avoid a build crash or other process error. Also, the controller 209 can be configured to react to such detection of abnormalities and can either automatically stop, continue, or modify the build process in any suitable manner. Such torque monitoring is less complicated and less expensive than existing forms of process monitoring.

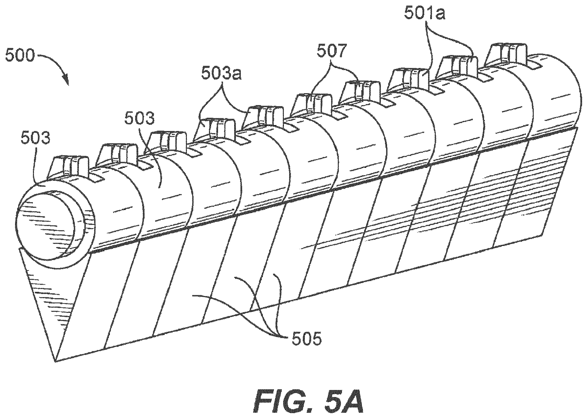

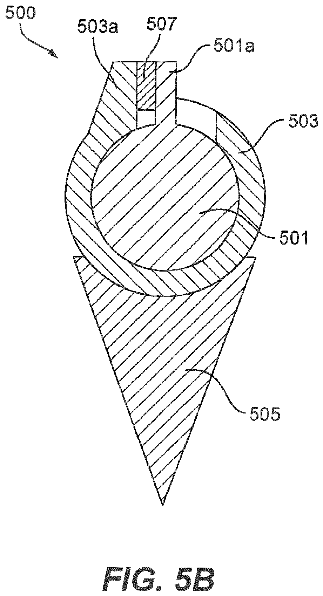

While recoater 201 is shown including both a roller 201a and a continuous recoater shield (e.g., as shown in on a front portion of the recoater 201), it is contemplated that any suitable recoater assembly can be utilized (e.g., a recoater having a blade instead of a roller). For example, referring to Figs. 5A and 5B, an embodiment of a recoater blade assembly 500 includes a shaft 501 and a plurality of collars 503 rotatably disposed around the shaft 501, each collar 503 including a blade segment 505 rigidly connected to the collar 503. The shaft 501 can be fixed relative to the recoater 201 such that only the collar 503 and blade segment 505 can move relative to the recoater 201.

The recoater blade assembly 500 also includes a plurality of load cells 507 that are configured to sense force between the shaft and the collars. For example, each load cell 507 can be disposed between a collar flange 503a and a shaft flange 501a. It is contemplated that one or more of the load cells 507 can operate to sense compression and/or tension between the collar flange 503a and the shaft flange 501a.

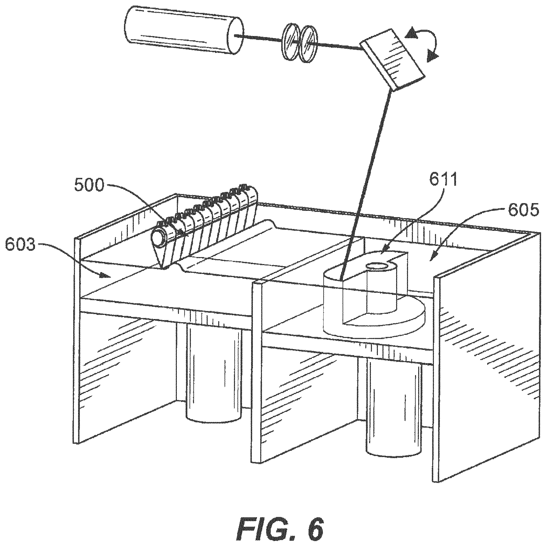

Using a recoater blade assembly 500 as described above, receiving torque data (e.g., at block 101) can include receiving force data from a plurality of load cells 507, each load cell 507 operatively associated with a blade segment 505 of a recoater blade assembly 500. Referring additionally to Fig. 6, utilizing a segmented the recoater blade assembly 500 as shown allows variable detection of build abnormalities along the length of the recoater blade assembly 500 which allows location determination on a two dimensional axis when correlated with translation position of the recoater blade assembly 500 across the powder bed 603 or build area 605.

For example, as the recoater blade assembly 500 traverses the build area 605, if powder short feeding or part swell of an additively manufactured product 611 occurs, it will register as a difference on the load cell 507 corresponding to the traversing blade segment 505 (e.g., higher force caused by larger drag on the blade segment 505). Using this data, the location on the build area 605 can be determined with X-Y coordinates (e.g., X coordinates determined by translation position of the recoater 500 and Y coordinates determined by forces on load sensors 507). This can allow more accurate closed loop control to quickly identify and/or remedy quality issues as they accumulate in a build.

The methods and systems of the present disclosure, as described above and shown in the drawings, provide for additive manufacturing systems and methods with superior properties including improved quality control. While the apparatus and methods of the subject disclosure have been shown and described with reference to embodiments, those skilled in the art will readily appreciate that changes and/or modifications may be made thereto without departing from the scope of the subject disclosure as defined by the claims.

## Claims

1. A method (100), comprising:
receiving torque data (101) of a powder recoater (201) having a shaft (501), said powder recoater operatively connected to an additive manufacturing system (200), wherein the torque data includes torque data of the recoater when the recoater traverses a build area (205), wherein receiving torque data (101) includes receiving force data from a plurality of load cells, each load cell operatively associated with the shaft and one of a plurality of collars rotatably disposed around the shaft, each collar rigidly connected to a blade segment of a recoater blade assembly; and
determining a quality (103) of one or more of an additive manufacturing process (200) and/or product based on the torque data.

2. The method of claim 1, wherein determining the quality (103) includes comparing the torque data with reference data to determine whether the torque data is within a predetermined range of the reference data.

3. The method of claim 1, wherein determining the quality includes determining if a powder recoat on the build area (205) is incomplete, and preferably further comprising one or more of alerting a user and/or prompting the user to recoat the build area (205), and/or further comprising causing the powder recoater to recoat the build area (205).

4. The method of claim 1, wherein determining the quality (103) includes determining if an additively manufactured product in the build area (205) has part swell if a predetermined swell torque is received.

5. The method of claim 4, wherein determining if an additively manufactured product (311) in the build area (205) has part swell further includes determining if the part swell is recoverable part swell or irrecoverable part swell based on received torque data.

6. The method of claim 5, wherein determining the quality (103) includes correlating the torque data with recoater location data and/or reference build location data for the additively manufactured product (311), such that the location of one or more specific additively manufactured products (311) can be determined if the one or more of the additively manufactured products has part swell.

7. The method of claim 6, wherein if the part swell is determined to be recoverable, the method further includes lowering a laser power on and/or at a region of the one or more of the additively manufactured products that have recoverable part swell, and/or wherein if the part swell is determined to be irrecoverable, the method further includes alerting a user and/or shutting off a laser power to the additively manufactured products that have irrecoverable part swell.

8. A non-transitory computer readable medium, comprising computer readable instructions for a controller (209) that is configured to control an additive manufacturing process, the computer readable instructions including:
receiving torque data (101) of a powder recoater having a shaft (501), said powder recoater operatively connected to an additive manufacturing system (200), wherein the torque data includes torque data of the recoater when the recoater traverses a build area (205), wherein receiving torque data includes receiving force data from a plurality of load cells, each load cell operatively associated with the shaft and one of a plurality of collars rotatably disposed around the shaft, each collar rigidly connected to a blade segment of a recoater blade assembly; and
determining a quality (103) of one or more of an additive manufacturing process and/or product based on the torque data.

9. The non-transitory computer readable medium of claim 8, wherein determining the quality (103) includes comparing the torque data with reference data to determine whether the torque data is within a predetermined range of the reference data.

10. The non-transitory computer readable medium of claim 8, wherein determining the quality (103) includes determining if a powder recoat on the build area is incomplete.

11. The non-transitory computer readable medium of claim 10, wherein the computer readable instructions further include one or more of alerting a user and/or prompting the user to recoat the build area, and/or wherein the computer readable instructions further include causing the powder recoater to recoat the build area (205).

12. The non-transitory computer readable medium of claim 8, wherein determining the quality (103) includes determining if an additively manufactured product in the build area (205) has part swell if a predetermined swell torque is received.

13. The non-transitory computer readable medium of claim 12, wherein determining if an additively manufactured product (311) in the build area (205) has part swell further includes determining if the part swell is recoverable part swell or irrecoverable part swell based on received torque data, and preferably wherein determining the quality (103) includes correlating the torque data with recoater location data and/or reference build location data for the additively manufactured product, such that the location of one or more specific additively manufactured products can be determined if the one or more of the additively manufactured products has part swell.

14. A recoater blade assembly (500), comprising,
a shaft (501);
a plurality of collars (503) rotatably disposed around the shaft (501), each collar (503) including a blade segment (505) rigidly connected to the collar (503); and
a plurality of load cells (507) that are configured to sense force between the shaft (501) and the collars (503).

15. The recoater blade assembly of claim 14, wherein each load cell (507) disposed between a collar flange (503a) and a shaft flange (501a).

## Patentansprüche

1. Verfahren (100), umfassend:
Empfangen von Drehmomentdaten (101) eines Pulvernachbeschichters (201) mit Welle (501), wobei der Nachbeschichter operativ an ein generatives Fertigungssystem (200) angeschlossen ist, wobei die Drehmomentdaten Drehmomentdaten des Nachbeschichters umfassen, wenn der Nachbeschichter einen Konstruktionsbereich (205) durchläuft, wobei das Empfangen der Drehmomentdaten (101) das Empfangen der Kraftdaten von einer Vielzahl an Kraftmessdosen umfasst, wobei jede Kraftmessdose operativ mit der Welle und einer von einer Vielzahl an drehbar um die Welle angeordneter Manschetten verbunden ist, wobei jede Manschette starr mit einem Schaufelsegment einer Nachbeschichterschaufelanordnung verbunden ist; und
Bestimmen einer Qualität (103) von einem oder mehreren von einem generativen Fertigungsprozess (200) und/oder Produkt aufgrund der Drehmomentdaten.

2. Verfahren nach Anspruch 1, wobei das Bestimmen der Qualität (103) das Vergleichen der Drehmomentdaten mit Referenzdaten umfasst, um zu bestimmen, ob die Drehmomentdaten sich innerhalb eines vorgegebenen Bereichs der Referenzdaten befinden.

3. Verfahren nach Anspruch 1, wobei das Bestimmen der Qualität das Bestimmen beinhaltet, ob eine Pulvernachbeschichtung in dem Konstruktionsbereich (205) unvollständig ist, und vorzugsweise außerdem eine oder mehrere der folgenden Aktivitäten umfasst: Alarmieren eines Anwenders und/oder Auffordern des Anwenders, den Konstruktionsbereich (205) nachzubeschichten; und/oder außerdem das Veranlassen des Pulvernachbeschichters zum Nachbeschichten des Konstruktionsbereichs (205) umfasst.

4. Verfahren nach Anspruch 1, wobei das Bestimmen der Qualität (103) das Bestimmen beinhaltet, ob ein generativ gefertigtes Produkt im Konstruktionsbereich (205) eine Teilausbauchung hat, wenn ein vorgegebenes Ausbauchungsdrehmoment empfangen wird.

5. Verfahren nach Anspruch 4, wobei das Bestimmen, ob ein generativ gefertigtes Produkt (311) im Konstruktionsbereich (205) eine Teilausbauchung hat, ferner das Bestimmen beinhaltet, ob die Teilausbauchung aufgrund der empfangenen Drehmomentdaten eine behebbare Teilausbauchung oder eine nicht behebbare Teilausbauchung ist.

6. Verfahren nach Anspruch 5, wobei das Bestimmen der Qualität (103) beinhaltet, die Drehmomentdaten mit den Nachbeschichterpositionsdaten und/oder Konstruktionspositionsreferenzdaten für das generativ gefertigte Produkt (311) in Korrelation zu bringen, so dass die Position von einem oder mehreren spezifischen generativ gefertigten Produkten (311) bestimmt werden kann, und ob das eine oder mehrere der generativ gefertigten Produkte eine Teilausbauchung haben.

7. Verfahren nach Anspruch 6, wobei, wenn bestimmt wurde, dass die Teilausbauchung behebbar ist, das Verfahren ferner das Herabsenken einer Laserenergie auf und/oder in einen Bereich des einen oder der mehreren der generativ gefertigten Produkte, die behebbare Teilausbauchung haben, beinhaltet, und/oder, wenn bestimmt wurde, dass die Teilausbauchung nicht behebbar ist, das Verfahren ferner beinhaltet, einen Anwender zu alarmieren und/oder eine Laserenergie zu den generativ gefertigten Produkten, die nicht behebbare Teilausbauchung haben, abzuschalten.

8. Nicht vorübergehendes computerlesbares Medium, umfassend computerlesbare Anweisungen für einen Regler (209), der zum Kontrollieren eines generativen Fertigungsprozesses konfiguriert ist, wobei die computerlesbaren Anweisungen folgendes umfassen:
Empfangen von Drehmomentdaten (101) eines Pulvernachbeschichters, der eine Welle (501) hat, wobei der Pulvernachbeschichter operativ an ein generatives Fertigungssystem (200) angeschlossen ist, wobei die Drehmomentdaten Drehmomentdaten des Nachbeschichters umfassen, wenn der Nachbeschichter einen Konstruktionsbereich (205) durchläuft, wobei das Empfangen der Drehmomentdaten das Empfangen der Kraftdaten von einer Vielzahl an Kraftmessdosen umfasst, wobei jede Kraftmessdose operativ mit der Welle und einer von einer Vielzahl an drehbar um die Welle angeordneter Manschetten verbunden ist, wobei jede Manschette starr mit einem Schaufelsegment einer Nachbeschichterschaufelanordnung verbunden ist; und
Bestimmen einer Qualität (103) von einem oder mehreren von einem generativen Fertigungsprozess und/oder Produkt aufgrund der Drehmomentdaten.

9. Nicht vorübergehendes computerlesbares Medium nach Anspruch 8, wobei das Bestimmen der Qualität (103) das Vergleichen der Drehmomentdaten mit den Referenzdaten umfasst, um zu bestimmen, ob die Drehmomentdaten sich innerhalb eines vorgegebenen Bereichs der Referenzdaten befinden.

10. Nicht vorübergehendes computerlesbares Medium nach Anspruch 8, wobei das Bestimmern der Qualität (103) das Bestimmen umfasst, ob eine Pulvernachbeschichtung auf dem Konstruktionsbereich unvollständig ist.

11. Nicht vorübergehendes computerlesbares Medium nach Anspruch 10, wobei die computerlesbaren Anweisungen ferner eine oder mehrere einer Warnung an den Anwender und/oder die Aufforderung an den Anwender umfassen, den Konstruktionsbereich nachzubeschichten, und/oder wobei die computerlesbaren Anweisungen ferner umfassen, den Pulvernachbeschichter zum Nachbeschichten des Konstruktionsbereichs (205) zu veranlassen.

12. Nicht vorübergehendes computerlesbares Medium nach Anspruch 8, wobei das Bestimmen der Qualität (103) das Bestimmen umfasst, ob ein generativ gefertigtes Produkt im Konstruktionsbereich (205) eine Teilausbauchung hat, wenn ein vorgegebenes Ausbauchungsdrehmoment empfangen wird.

13. Nicht vorübergehendes computerlesbares Medium nach Anspruch 12, wobei das Bestimmen, ob ein generativ gefertigtes Produkt (311) im Konstruktionsbereich (205) eine Teilausbauchung hat, ferner das Bestimmen aufgrund der empfangenen Drehmomentdaten umfasst, ob die Teilausbauchung eine behebbare Teilausbauchung oder eine nicht behebbare Teilausbauchung ist, und wobei das Bestimmen der Qualität (103) vorzugsweise umfasst, die Drehmomentdaten mit Nachbeschichterpositionsdaten und/oder Referenzkonstruktionspositionsdaten für das generativ gefertigte Produkt in Korrelation zu setzen, so dass die Position von einem oder mehreren spezifischen generativ gefertigten Produkten bestimmt werden kann, ob das eine oder mehrere der generativ gefertigten Produkte eine Teilausbauchung hat.

14. Nachbeschichterschaufelanordnung (500), umfassend
eine Welle (501)
eine Vielzahl an Manschetten (503), die drehbar um die Welle (501) angeordnet sind, wobei jede Manschette (503) ein Schaufelsegment (505) umfasst, das starr mit der Manschette (503) verbunden ist; und
eine Vielzahl an Kraftmessdosen (507), die konfiguriert sind, um die Kraft zwischen der Welle (501) und den Manschetten (503) abzutasten.

15. Nachbeschichterschaufelanordnung nach Anspruch 14, wobei jede Kraftmessdose (507) zwischen einem Manschettenflansch (503a) und einem Wellenflansch (501a) angeordnet ist.

## Revendications

1. Procédé (100), comprenant :
la réception de données de couple (101) d'une réenduiseuse de poudre (201) ayant un arbre (501), ladite réenduiseuse de poudre étant raccordée pour un fonctionnement à un système de fabrication d'additifs (200), dans lequel les données de couple incluent des données de couple de la réenduiseuse lorsque la réenduiseuse traverse une zone de construction (205), dans lequel la réception des données de couple (101) inclut la réception de données de force en provenance d'une pluralité de cellules de charge, chaque cellule de charge étant associée pour un fonctionnement à l'arbre et à l'un d'une pluralité de colliers disposés de façon rotative autour de l'arbre, chaque collier étant raccordé de façon rigide à un segment de lame d'un ensemble lame de réenduiseuse ; et
la détermination d'une qualité (103) d'un ou plusieurs d'un processus de fabrication d'additifs (200) et/ou d'un produit sur la base des données de couple.

2. Procédé selon la revendication 1, dans lequel la détermination de la qualité (103) inclut la comparaison des données de couple à des données de référence afin de déterminer si les données de couple se situent à l'intérieur d'une plage prédéterminée des données de référence.

3. Procédé selon la revendication 1, dans lequel la détermination de la qualité inclut la détermination du fait qu'une réenduction de poudre sur la zone de construction (205) est incomplète, et de préférence comprenant en outre une ou plusieurs de l'alerte d'un utilisateur et/ou de l'invitation de l'utilisateur à réenduire la zone de construction (205), et/ou comprenant en outre l'entraînement de la réenduiseuse de poudre à réenduire la zone de construction (205).

4. Procédé selon la revendication 1, dans lequel la détermination de la qualité (103) inclut la détermination du fait qu'un produit fabriqué de manière additive dans la zone de construction (205) présente ou non un gonflement de pièce si un couple de gonflement prédéterminé est reçu.

5. Procédé selon la revendication 4, dans lequel la détermination du fait qu'un produit fabriqué de manière additive (311) dans la zone de construction (205) présente ou non un gonflement de pièce inclut en outre la détermination du fait que le gonflement de pièce est un gonflement de pièce récupérable ou un gonflement de pièce irrécupérable, sur la base des données de couple reçues.

6. Procédé selon la revendication 5, dans lequel la détermination de la qualité (103) inclut une corrélation des données de couple avec des données de position de la réenduiseuse et/ou des données de position de construction de référence pour le produit fabriqué de manière additive (311), de telle sorte que la position d'un ou plusieurs produits fabriqués de manière additive spécifiques (311) peut être déterminée si les un ou plusieurs des produits fabriqués de manière additive présentent un gonflement de pièce.

7. Procédé selon la revendication 6, dans lequel si le gonflement de pièce est déterminé comme étant récupérable, le procédé comprend en outre la réduction d'une puissance laser sur et/ou à une région des un ou plusieurs des produits fabriqués de manière additive qui présentent un gonflement de pièce récupérable, et/ou dans lequel si le gonflement de pièce est déterminé comme étant irrécupérable, le procédé comprend en outre l'alerte d'un utilisateur et/ou l'arrêt d'une puissance laser aux produits fabriqués de manière additive qui présentent un gonflement de pièce irrécupérable.

8. Support non transitoire lisible par ordinateur, comprenant des instructions lisibles par ordinateur pour un dispositif de contrôle (209) qui est configuré pour contrôler un processus de fabrication d'additifs, les instructions lisibles par ordinateur incluant :
la réception de données de couple (101) d'une réenduiseuse de poudre ayant un arbre (501), ladite réenduiseuse de poudre étant raccordée pour un fonctionnement à un système de fabrication d'additifs (200), dans lequel les données de couple incluent des données de couple de la réenduiseuse lorsque la réenduiseuse traverse une zone de construction (205), dans lequel la réception des données de couple inclut la réception de données de force en provenance d'une pluralité de cellules de charge, chaque cellule de charge étant associée pour un fonctionnement à l'arbre et à l'un d'une pluralité de colliers disposés de façon rotative autour de l'arbre, chaque collier étant raccordé de façon rigide à un segment de lame d'un ensemble lame de réenduiseuse ; et
la détermination d'une qualité (103) d'un ou plusieurs d'un processus de fabrication d'additifs et/ou d'un produit sur la base des données de couple.

9. Support non transitoire lisible par ordinateur selon la revendication 8, dans lequel la détermination de la qualité (103) inclut la comparaison des données de couple à des données de référence afin de déterminer si les données de couple se situent à l'intérieur d'une plage prédéterminée des données de référence.

10. Support non transitoire lisible par ordinateur selon la revendication 8, dans lequel la détermination de la qualité (103) inclut la détermination du fait qu'une réenduction de poudre sur la zone de construction est incomplète.

11. Support non transitoire lisible par ordinateur selon la revendication 10, dans lequel les instructions lisibles par ordinateur incluent en outre en outre une ou plusieurs de l'alerte d'un utilisateur et/ou de l'invitation de l'utilisateur à réenduire la zone de construction, et/ou dans lequel les instructions lisibles par ordinateur incluent en outre l'entraînement de la réenduiseuse de poudre à réenduire la zone de construction (205).

12. Support non transitoire lisible par ordinateur selon la revendication 8, dans lequel la détermination de la qualité (103) inclut la détermination du fait qu'un produit fabriqué de manière additive dans la zone de construction (205) présente ou non un gonflement de pièce si un couple de gonflement prédéterminé est reçu.

13. Support non transitoire lisible par ordinateur selon la revendication 12, dans lequel la détermination du fait qu'un produit fabriqué de manière additive (311) dans la zone de construction (205) présente ou non un gonflement de pièce inclut en outre la détermination du fait que le gonflement de pièce est un gonflement de pièce récupérable ou un gonflement de pièce irrécupérable, sur la base des données de couple reçues, et de préférence dans lequel la détermination de la qualité (103) inclut une corrélation des données de couple avec des données de position de la réenduiseuse et/ou des données de position de construction de référence pour le produit fabriqué de manière additive, de telle sorte que la position d'un ou plusieurs produits fabriqués de manière additive spécifiques peut être déterminée si les un ou plusieurs des produits fabriqués de manière additive présentent un gonflement de pièce.

14. Ensemble lame de réenduiseuse (500), comprenant,
un arbre (501) ;
une pluralité de colliers (503) disposés de façon rotative autour de l'arbre (501), chaque collier (503) incluant un segment de lame (505) raccordé de façon rigide au collier (503) ; et
une pluralité de cellules de charge (507) qui sont configurées pour détecter une force entre l'arbre (501) et les colliers (503) .

15. Ensemble lame de réenduiseuse selon la revendication 14, dans lequel chaque cellule de charge (507) est disposée entre une bride de collier (503a) et une bride d'arbre (501a).
